# EUROPEAN PATENT SPECIFICATION

(11) **EP 1 657 416 B1**
(45) Date of publication and mention of the grant of the patent: **26.06.2013**
(21) Application number: 05023101.8
(22) Date of filing: 22.10.2005
(51) Int. Cl.: F16H 57/04, F01P 7/16

(54) **Cooling system for farming tractors**
Kühlungssystem für Landwirtschaftsfahrzeuge
Système de rafroidissement pour tracteurs

(30) Priority: 10.11.2004 GB 0424780
(43) Date of publication of application: 17.05.2006
(73) Proprietor: AGCO GmbH, 87616 Marktoberdorf (DE)
(72) Inventor: Heindl, Richard, 87616 Marktoberdorf (DE)
(74) Representative: Morrall, Roger

(56) References cited:
- WO-A-2004/025094
- WO-A-2004/040105
- DE-A1- 10 138 704
- DE-A1- 10 302 170
- GB-A- 2 341 830
- US-A- 4 062 401

## Description

The invention relates to a cooling system for farming tractors having at least two separate cooling circuits, one designed for the drive gearing and the other one designed for the hydraulic system to actuate agricultural tools. Each of the cooling circuits is provided with an oil cooler.

Farming tractors often include drive gearings comprising an infinitely variable change-speed drive gear. During use of such vehicles the oil serving to activate the drive gearing and/or for lubrication and cooling surfaces is heated up and has to be cooled prior to further use. The cooling requirement can be increased when the drive gearing is of the infinitely variable change speed type in which oil is used to transmit all or part of the driving torque through a hydraulic pump/motor loop. In such arrangements cooling is done with the help of an oil cooler which is incorporated in the cooling circuit of the drive gearing. The oil cooler is an oil/air-cooler transporting the heat from the oil to the ambient atmosphere. However, such oil coolers need a large space to be mounted because the coolers have to be designed with respect to the maximum cooling capacity requirement in the cooling circuit of the drive gearing. Thus, such oil coolers need large cooling areas for the transfer of the heat from the oil to the air.

Farming tractors of this kind, as for example shown in US 4 062 401, do not only include a cooling circuit for the drive gearing, but also are provided with an hydraulic system having cooling circuits adapted to different agricultural tools like a power lift arrangement, loading shovels, cutter bar arrangements etc. This equipment must be supplied with oil which during use is substantially heated up which makes the cooling of the oil necessary. For this purpose the hydraulic system is designed to have an oil cooler also in form of an oil/air-cooler. However, this oil cooler cools only the oil supplied to the tools. In addition, this cooler also needs a large mounting room due to large necessary areas to transfer heat. It is difficult to have enough room on a tractor to mount two of these oil coolers. This is especially the case when oil coolers are to be mounted at an optimal place, meaning right in front of the engine. This place is limited due to the requirement to maintain optimal sight of tools working in front of the tractor. There is therefore only a small amount of space to mount the coolers.

It is known, however, that normally it is not necessary to provide maximum capacity in both of the oil coolers serving to cool the driving gear on the one hand and the hydraulic system on the other hand. Maximum cooling capacity in the cooling circuit serving the drive gearing is necessary during high driving speeds. However, in those times the tools are normally not actuated or only actuated to a very restricted extent. On the other hand, using the tools with maximum capacity the tractor is moved normally only with no or very little speed. Consequently, it is obvious to lead the oil of both cooling circuits through a common oil/air cooler to minimize the expenditure of the oil cooling. Such a solution can only be applied when the mounting problems are solved and the oils used by the circuits are compatible. However, frequently the properties of the oil required in the driving gear circuit are required to be different from the properties required in the hydraulic system circuit. For example, for reasons of protection of the environment, in the hydraulic system of tractors which are used in protected areas oil is used which is biologically degradable, which is not the type of oil required in the drive gearing. Consequently, two different kinds of oil need two different cooling circuits one for the drive gearing, the other for the hydraulic system.

It is the object of the invention to provide a cooling system for farming tractors having separate cooling circuits for the drive gearing on the one hand and the hydraulic system on the other hand and having two oil coolers needing only little space to be mounted.

This is achieved with a cooling system for a vehicle such as a farming tractor which has at least two separate cooling circuits connected to each other by an oil/oil-heat exchanger. This connection makes it possible to transfer heat from the oil flowing in one of the cooling circuits to the oil flowing in the other cooling circuit and to use both oil coolers for cooling purposes independent whether the main heat occurs in the one or the other of the cooling circuits. In other words, the oil cooler of the cooling circuit having the higher temperature uses its own oil cooler and the oil cooler of the other circuit to transfer heat to the air of the environment. Doing this both oil coolers may be designed to be of smaller size. It is even possible to use only one air/oil cooler for both circuits and to avoid the air/oil cooler of the other circuit.

The oil/oil-heat exchanger is positioned downstream of the two oil/air coolers to use the cooling capacity of the oil/air-cooler of the circuit having the higher temperature completely.

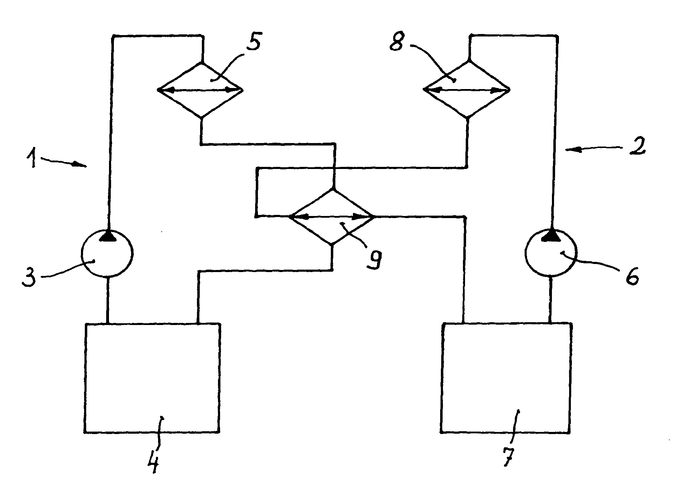

A preferred embodiment of the invention will be explained with reference to the accompanying drawing which schematically shows a cooling system in accordance with the present invention.

A cooling system of a farming tractor includes a first cooling circuit 1 and a second cooling circuit 2. The first cooling circuit 1 is assigned to cool the drive gearing 4. The second cooling circuit 2 is assigned to cool a hydraulic system 7. Cooling circuit 1 includes a pump 3 which is connected by a conduit with an oil cooler 5 and with the drive gearing 4. Oil cooler 5 is an oil/air-cooler. The oil cooler 5 is designed and arranged to have a cooling capacity which is about half of the maximum cooling capacity needed in cooling circuit 1. Cooling circuit 2 in similar manner contains a pump 6 for moving the hydraulic liquid of the hydraulic system 7 to one or more agricultural tools (not shown) and then to an oil cooler 8 and further back to a reservoir (not shown) of the hydraulic system 7. The oil cooler 8 is a cooler oil/air. The oil cooler 8 is designed also to have a cooling capacity which is about half of the maximum cooling capacity needed in the cooling circuit 2.

Both cooling circuits 1, 2 include a heat exchanger 9 which is an oil/oil exchanger and which is arranged behind the oil coolers 5 and 8. The heat exchanger 9 serves to transmit heat from one cooling circuit to the other and vice versa. Consequently, the heat exchanger 9 has a primary side connected to the cooling circuit 1 and a secondary side connected to a cooling circuit 2. Heat from the circuit which has the higher temperature is transferred to the circuit having the lower temperature. It is possible to design the coolers 5 and 8 and the heat exchanger 9 in a manner so that during the normal rise of temperature of the oil in a certain conduit, for example in the cooling circuit 1, oil cooler 5 is capable of dissipating all the existing heat alone. On the other hand, both of the oil coolers 5 and 8 are used if additional heat is involved and maximum cooling effect is necessary.

In certain installations one of the oil/air cooler 5 or 8 can be eliminated and the remaining oil/air cooler can be increased in size appropriately. In this arrangement the cooling of both circuits is thorough the remaining oil/air cooler and the interconnecting oil/oil exchanger 9.

## Claims

1. A cooling system for a vehicle having at least two separate cooling circuits (1, 2), one designed to cool a drive gearing (4) and the other designed to cool a hydraulic system (7) which supplies pressurised oil to operate agricultural tools, and oil/air cooler means (5,8) for the circuits, the system being **characterized in that** both cooling circuits (1, 2) are connected to each other by an oil/oil-heat exchanger (9) serving to transfer heat from oil flowing in one of the cooling circuits to oil flowing in the other cooloing circuit.

2. A cooling system according to claim 1, **characterized in that** the oil/oil-heat exchanger (9) is located downstream the oil cooler means (5, 8) in the direction of flow of the oil.

3. A cooling system according to claim 1 or 2 **characterised in that** the oil/air cooler means comprises a separate oil/air cooler (5,8) in each circuit (1,2).

4. A cooler system according to claim 1 or 2 **characterised in that** the oil/air cooler means comprises a single oil/air cooler in only one of the circuits (1,2).

## Patentansprüche

1. Kühlsystem für ein Fahrzeug mit mindestens zwei separaten Kühlkreisläufen (1, 2), wobei ein Kühlkreislauf geeignet gestaltet ist, um ein Antriebsgetriebe (4) zu kühlen und der andere Kühlkreislauf geeignet gestaltet ist, um ein hydraulisches System (7) zu kühlen, welches druckbeaufschlagtes Öl bereitstellt zum Betrieb landwirtschaftlicher Werkzeuge, und mit mindestens einem Öl/Luft-Kühl-Organ (5, 8) für die Kreisläufe **dadurch gekennzeichnet, dass** die beiden Kühlkreisläufe (1, 2) über einen Öl/Öl-Wärmetauscher miteinander verbunden sind (9), der dazu dient, Wärme von Öl, welches in einem der beiden Kühlkreisläufe fließt, an Öl, welches in dem anderen Kühlkreislauf fließt, zu übertragen.

2. Kühlsystem nach Anspruch 1, **dadurch gekennzeichnet, dass** der Öl/Öl-Wärmetauscher (9) in Flussrichtung des Öls stromabwärts des Öl-Kühl-Organs (5, 8) angeordnet ist.

3. Kühlsystem nach Anspruch 1 oder 2, **dadurch gekennzeichnet, dass** das Öl/Luft-Kühl-Organ einen separaten Öl/Luft-Kühler (5, 8) in jedem Kreislauf (1, 2) aufweist.

4. Kühlsystem nach Anspruch 1 oder 2, **dadurch gekennzeichnet, dass** das Öl/Luft-Kühl-Organ einen einzigen Öl/Luft-Kühler in lediglich einem der Kreisläufe (1, 2) aufweist.

## Revendications

1. Dispositif de refroidissement pour un véhicule comportant au moins deux circuits de refroidissement distinct (1, 2), un premier étant conçu de manière à refroidir une boîte de vitesses (4) et l'autre étant conçu de manière à refroidir un circuit hydraulique (7) qui délivre de l'huile sous pression afin de faire fonctionner des outils agricoles, et un moyen de refroidissement huile/air (5, 8) pour les circuits, le dispositif étant **caractérisé en ce que** les deux circuits de refroidissement (1, 2) sont raccordés l'un à l'autre par un échangeur thermique huile/huile (9) servant à transférer de la chaleur à partir de l'huile circulant dans un premier des circuits de refroidissement vers l'huile circulant dans l'autre circuit de refroidissement.

2. Dispositif de refroidissement selon la revendication 1, **caractérisé en ce que** l'échangeur de chaleur huile/huile (9) est situé en aval du moyen de refroidissement d'huile (5, 8) dans le sens d'écoulement de l'huile.

3. Dispositif de refroidissement selon la revendication 1 ou 2, **caractérisé en ce que** le moyen de refroidissement huile/air comprend un refroidisseur huile/air distinct (5, 8) sur chaque circuit (1, 2).

4. Dispositif de refroidissement selon la revendication 1 ou 2, **caractérisé en ce que** le moyen de refroidissement huile/air comprend un seul refroidisseur huile/air sur un seul des circuits (1, 2).
